# EUROPEAN PATENT APPLICATION

(11) **EP 2 325 115 A1**
(43) Date of publication of application: **25.05.2011**
(21) Application number: 09425481.0
(22) Date of filing: 24.11.2009
(51) Int. Cl.: B65G 47/64

(54) **Fast rocking flow-deviation unit**

(71) Applicant: ELSAG DATAMAT S.p.A., Genova (IT)
(72) Inventor: Del Canto, Maurizio, 16154 Genova (IT); Di Stefano, Nicola, 16154 Genova (IT); Parodi, Carlo, 16154 Genova (IT)
(74) Representative: Bergadano, Mirko

(57) **Abstract**

A flow-deviation unit (1) for postal objects, parcels, or luggage comprises a frame (2) having at least one portal (8), a mobile structure (3) hinged to the frame (2), and two linear electric motors (14) mounted on the columns (9) of the portal (8) and configured for moving the mobile structure (3).

## Description

The present invention relates to a rocking flow-deviation unit for a system for conveying luggage and/or various articles such as postal parcels, boxes, packets of letters and containers of various nature.

A system for conveying luggage is used, for example, in an airport for directing the luggage of the passengers towards the machines for the security checks and then towards the loading bays of the respective aircraft.

In a system for conveying luggage a flow-deviation unit has an inlet, a plurality of outlets, and a mobile member for conveying the parcels or the luggage towards the outlet assigned previously to each parcel or item of luggage. The flow-deviation unit is preceded in the direction of the flow of the parcels or luggage by an identification device that reads a plate or label applied to the item of luggage preferably at the moment of its expedition. The data read on the plate or label by the identification device are processed by a control unit that governs the flow-deviation unit for sending the parcel or item of luggage towards the outlet associated to the destination envisaged for that parcel or item of luggage.

There is felt the need to increase the speed of flow of the luggage within the conveying system to face the increase in the number of passengers and for reducing the processing times both during the operations of acceptance, control and embarkation of luggage and during those of reconsignment of luggage.

Furthermore, it is important that the system for conveying luggage should be precise in order to prevent the luggage that is to go on board an aircraft from being sent by mistake along another path on account of a delayed movement of the sorting devices. Said delay may be due to the weight of the parcel or item of luggage or else to the assembly play of the mobile member resulting from wear.

The needs referred to the sector of transport of luggage are common also to the other sectors of use of the flow-deviation unit, such as that of processing of postal articles or else of sorting of semifinished products during a manufacturing process. In particular, the flow-deviation unit according to the present invention is particularly suited to the sorting of objects having a weight of up to 60 kg.

The aim of the present invention is to provide a flow-deviation unit that will be able to meet the needs specified above.

The aim of the present invention is achieved by a flow-deviation unit according to Claim 1.

The invention will now be described with reference to the annexed drawings, which illustrate non-limiting examples of embodiment thereof and in which:
- Figure 1 is a perspective view of a flow-deviation unit according to the present invention;
- Figure 2 is a side view of the flow-deviation unit of Figure 1;
- Figure 3 is a perspective view of a detail of Figure 2;
- Figure 4 is a schematic side view of the flow-deviation unit of Figure 1; and
- Figure 5 is a perspective view of a second embodiment of the present invention.

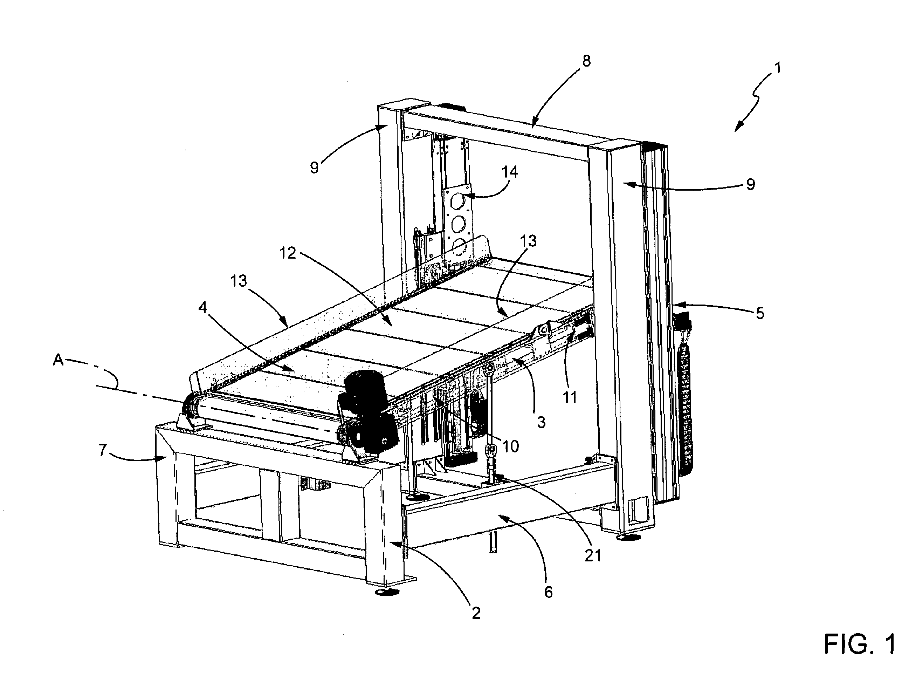

In Figure 1, designated as a whole by 1 is a flow-deviation unit comprising a frame 2 designed to be fixed with respect to a supporting base, a mobile structure 3 hinged to the frame 2, a conveying system 4 mounted on the mobile structure 3, and an actuation device 5 for moving the mobile structure 3.

The frame 2 comprises a supporting structure 7, a portal structure 8 facing the supporting structure 7, and transverse structures 6 set between the supporting structure 7 and the portal structure 8. The portal structure 8 comprises a pair of columns 9 supporting the actuation device 5. The mobile structure 3 is hinged along the axis A and is connected to the actuation device 5 so that it will be able to rock.

Preferably, the mobile structure 3 comprises a first end portion 10 hinged to the supporting structure 7, and a second end portion 11 connected to the actuation device 5. The conveying system 4 is active; i.e., it comprises a motor drive. For example, the conveying system 4 is a belt conveyor and comprises two end rollers having respective axes parallel to the axis A and an endless belt 12 wound between the two end rollers. At least one of the rollers is motor-driven, for example via an electric rotary motor preferably mounted on board the mobile structure 3. The endless belt 12 rests moreover on a rigid table. The table supports the endless belt 12 when an object is conveyed over the mobile structure 3.

The mobile structure 3 further comprises at least two side walls 13 arranged on opposite sides of the belt 12 for guiding the luggage and preventing accidental falling of the latter during movement of the mobile structure 4.

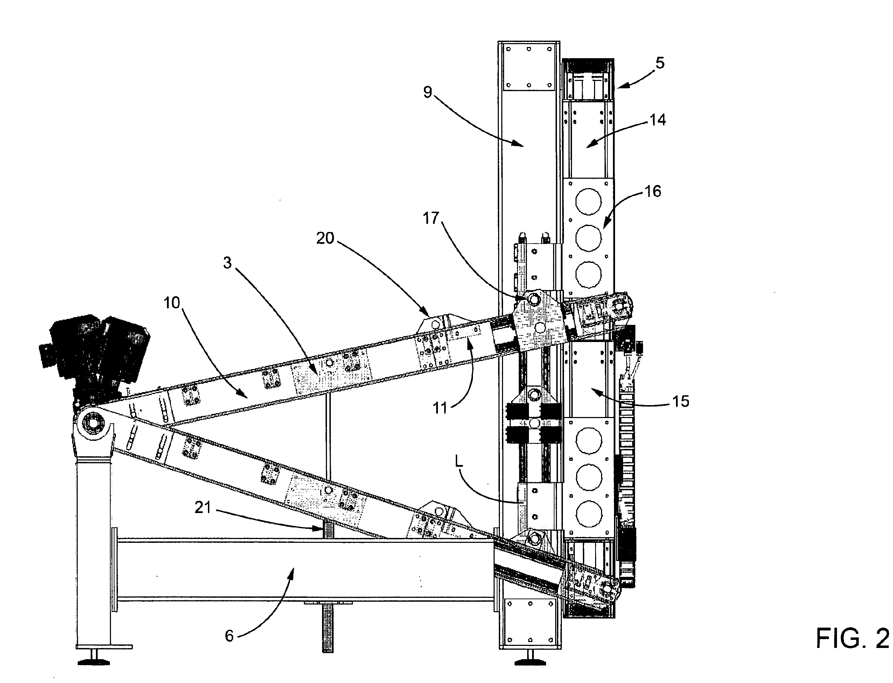

As illustrated in Figure 2, the actuation device 5 is equipped with slides 16 that are able to slide in the direction of the columns 9 and comprises two linear electric motors 14. Each linear motor 14 has permanent magnets 15 mounted on a structure fixed with respect to the column 9 and a driving element (equivalent to the stator of the rotary motor) mounted on the slide 16, which is connected to the end portion 11 and can slide in the proximity of the permanent magnets 15 along a linear guide L fixed to the respective column 9.

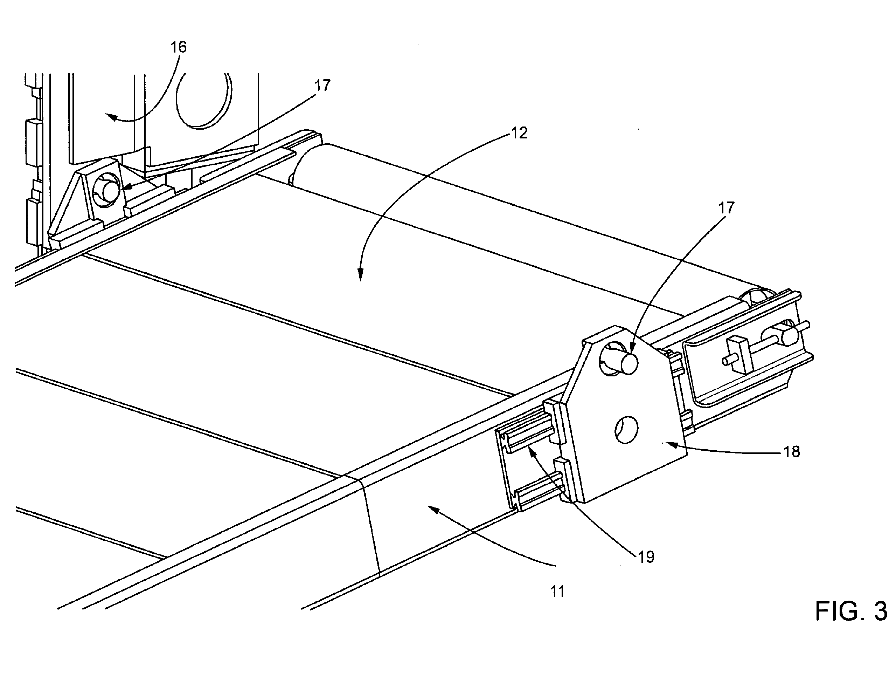

Preferably, the slide 16 is connected to the end portion 11 via a connection that enables a movement in the direction for conveying the luggage. For example, as illustrated in Figure 3, the slide 16 has a pin 17 that connects to a sliding carriage 18 positioned on the end portion 11 of the mobile structure 3; said sliding carriage 18 is able to move along a linear guide 19 parallel to the conveying plane defined by the belt 12.

In order to speed up the movement of the mobile structure 3, two hydraulic cylinders 21 are positioned between the transverse structures 6 and the mobile surface of the belt; for example, each cylinder is connected to the centre of the mobile structure 3 on opposite sides of the belt 12. Said cylinders exert a force such as to compensate the weight of the mobile structure.

Preferably, the mobile structure 3 is made of light materials, such as, for example, aluminium for reducing the force of inertia.

Preferably, the plane table on which the endless belt of the mobile structure rests is made of low-friction materials for facilitating sliding of the belt.

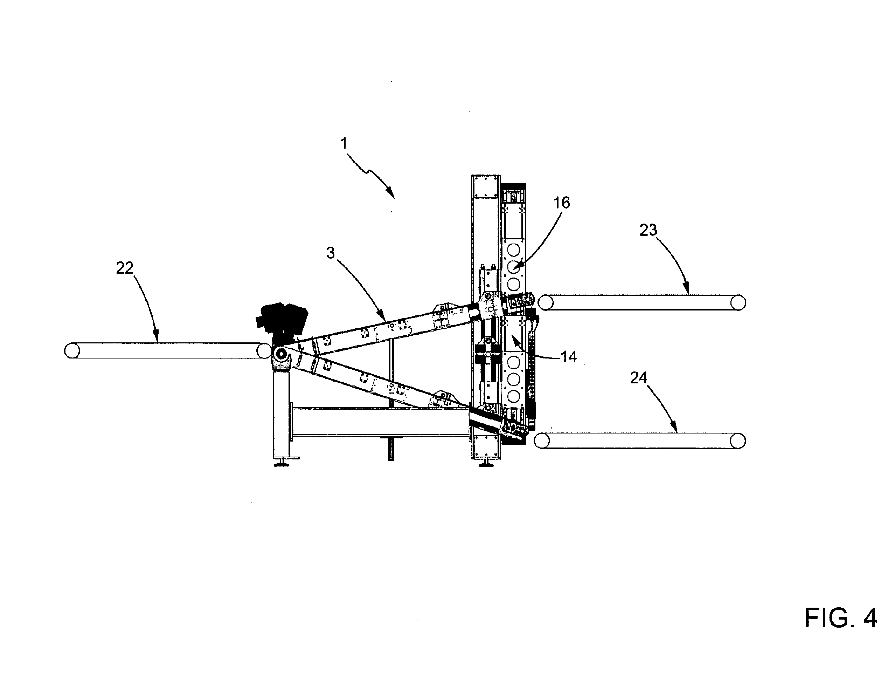

In use (Figure 4), the flow-deviation unit 1 is set between an inlet conveying device 22 co-operating with the inlet of the unit 1 and at least two outlet conveying devices 23, 24 (the conveying devices are illustrated schematically) co-operating with at least two positions of the outlet of the unit 1. A control unit (not illustrated) operates the actuation device 5 for moving the mobile structure 3. In particular, the slides 16 moved by the linear electric motors 14 are mobile between two positions, one of which is suited for sorting the luggage on the conveyor 23 and the other on the conveyor 24.

Since the travel of the slides 16 is linear, whereas the path of the end portion 11 is semicircular, the pin 17 follows a rectilinear path parallel to the axis of the columns 9 and moves within the mobile carriage 18 that describes the arc of a circumference.

During the movement of the mobile structure 3, the hydraulic cylinders 21 balance the weight of the mobile structure 3 and consequently enable reduction of the installed power of the actuation device 5.

The advantages of the flow-deviation unit 1 described and illustrated herein are outlined in what follows.

The linear electric motors 14 increase the dynamic performance of the flow-deviation unit 1 without jeopardizing the precision thereof. Preferably, the flow-deviation unit 1 comprises a single mobile structure 3 for sorting the luggage between the inlet and the outlets and is associated to an inlet conveyor 22 and to at least two outlet conveyors 23, 24. The linear electric motor 14 can be controlled in a precise way and can withstand high loads in such a way that a single mobile structure 3 is sufficient to perform in short times even long strokes along the columns 9. Consequently, the structure of the sorting unit 1 is simple and the maintenance required is minimal.

The application of the hydraulic cylinders 21 further increases the dynamic performance, as likewise the use of materials having a low specific weight. In this way, it is possible to move the mobile structure 3 with the luggage on board and to increase the frequency of movement and consequently the amount of luggage processed.

Finally, it is clear that modifications or variations may be made to the flow-deviation unit 1 described and illustrated herein, without thereby departing from the sphere of protection as defined by the annexed claims.

In particular, the flow-deviation unit 1 can be employed also for postal systems for parcels or systems for conveying blanks or semifinished products in machining workshops or foodstuff plants.

The linear electric motor 14 can present the drive element mounted on the structure fixed with respect to the column 9 and the permanent magnets 15 mounted on the slide 16 that is connected to the end portion 11 and can slide in the proximity of the drive element.

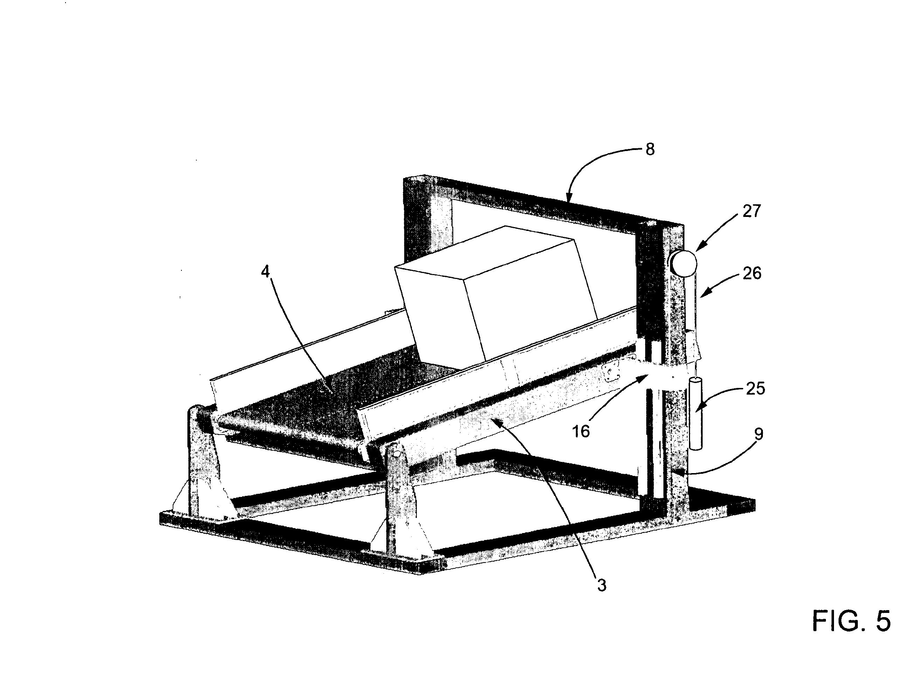

The hydraulic cylinders can be replaced with two counterweights having altogether a weight at least equal to that of the mobile structure 3. Figure 5 illustrates a flow-deviation unit according to an alternative embodiment in which the same reference numbers used previously are here used for designating units, devices, or elements that are functionally identical to the ones already described. In particular, the counterweights 25 are connected to the slides 16 via a flexible element, a cable, a belt, or a chain 26, which is wound around a jockey pulley 27 hinged on the columns 9.

As an alternative or in addition to what has been described, the two portions of the mobile structure 3, i.e., the end portion 10 hinged to the supporting structure 7 and the end portion 11 connected to the actuation device 5, are connected by an articulated joint 20 that enables rotation, at the most through 180°, of the end portion 11 on the end portion 10; i.e., the mobile structure 3 is foldable. In this way, maintenance activities on the mobile structure 3 are simplified. In particular, the replacement of the endless belt 12 can be performed easily by simply removing the pins 17 that connect the actuation device to the end portion 11 of the mobile structure and by turning the latter on the end portion 10.

## Claims

1. A flow-deviation unit (1) for postal objects, luggage, or semifinished products, comprising a frame (2) having a portal (8), a mobile structure (3) hinged to said frame (2) for deviating the flow, and two linear electric motors (14) mounted on said portal (8) and configured for moving said mobile structure (3).

2. The unit according to Claim 1, **characterized in that** it comprises compensation devices (21) configured for moving in a way corresponding to the movement of said mobile structure (3) and counterbalancing the weight of the latter for reducing the dynamic stresses.

3. The unit according to any one of the preceding claims, **characterized in that** it comprises at least one damper acting on said mobile structure (3).

4. The unit according to Claim 3, **characterized in that** said compensation devices (21) are fluidic and comprise said dampers.

5. The unit according to any one of the preceding claims, **characterized in that** it comprises a pair of slides (16) co-operating with fixed linear guides (19), said slides (16) being interposed for transferring a load between said linear electric motors (14) and said mobile structure (3).

6. The unit according to any one of the preceding claims, **characterized in that** said linear electric motors (14) are connected to said mobile structure via a sliding coupling (18) that is mobile in a direction transverse to that of movement of said electric motors (14).

7. The unit according to any one of the preceding claims, **characterized in that** it comprises an inlet (22) and at least two outlets (23, 24) and **in that** it comprises a single mobile structure (3) for sorting objects coming from said inlet (22) towards said at least two outlets (23, 24).

8. The unit according to any one of the preceding claims, **characterized in that** said mobile structure (3) comprises an active conveying device (12).

9. The unit according to any one of the preceding claims, **characterized in that** said mobile structure (3) is foldable.
